Europäisches Patentamt

European Patent Office

Office européen des brevets

(19)

(11) **EP 0 791 193 B1**

(12) **EUROPÄISCHE PATENTSCHRIFT**

(45) Veröffentlichungstag und Bekanntmachung des Hinweises auf die Patenterteilung:
**05.08.1998 Patentblatt 1998/32**

(21) Anmeldenummer: **95939249.9**

(22) Anmeldetag: **09.11.1995**

(51) Int Cl.⁶: **G05B 19/416**

(86) Internationale Anmeldenummer:
**PCT/EP95/04416**

(87) Internationale Veröffentlichungsnummer:
**WO 96/15482 (23.05.1996 Gazette 1996/23)**

(54) **SATZÜBERGREIFENDE GESCHWINDIGKEITSFÜHRUNG FÜR BELIEBIGEN OVERRIDE-BEREICH**

SPEED CONTROL FOR ANY OVERRIDE RANGE EFFECTIVE OVER A PLURALITY OF BLOCKS

COMMANDE EN VITESSE D'UNE PLURALITE DE BLOCS DANS N'IMPORTE QUELLE PLAGE DE CORRECTION DES VITESSES D'AVANCE

(84) Benannte Vertragsstaaten:
**AT CH DE ES FR GB IT LI SE**

(30) Priorität: **11.11.1994 EP 94117882**

(43) Veröffentlichungstag der Anmeldung:
**27.08.1997 Patentblatt 1997/35**

(73) Patentinhaber: **SIEMENS AKTIENGESELLSCHAFT 80333 München (DE)**

(72) Erfinder:
• **MÜLLER, Jürgen
D-71640 Ludwigsburg (DE)**
• **SPETH, Wolfgang
D-71723 Grossbottwar (DE)**
• **WESTERMEYER, Wilhelm
D-90425 Nürnberg (DE)**

(56) Entgegenhaltungen:
**EP-A- 0 299 080**

**Beschreibung**

Die Erfindung bezieht sich auf ein Verfahren zur vorausschauenden satzübergreifend arbeitenden Geschwindigkeitsführung von elektrischen Antrieben.

Bei modernen industriellen Steuerungen zum Einsatz beispielsweise bei Werkzeugmaschinen oder Robotern wird ein Vorschub zur Geschwindigkeitsführung in der Regel in Teileprogrammen satzweise vorgegeben. Um zuverlässig nicht schneller als mit dem programmierten Vorschub zu verfahren, muß ein aktueller Vorschub rechtzeitig reduziert werden können. Denn kommt es beispielsweise zu Satznachladestörungen, so kann folgender Fall auftreten, daß aufgrund einer aktuellen sehr hohen Vorschubgeschwindigkeit keine ausreichende Zeit mehr besteht, um den elektrischen Antrieb in der erforderlichen Zeit von der hohen Vorschubgeschwindigkeit zum Stillstand zu bringen. Das gleiche Problem tritt auch dann auf, wenn der programmierte Vorschub eines folgenden Datensatzes des Teileprogramms um einen erheblichen Betrag niedriger ist als die momentan aktuelle verfahrene Vorschubgeschwindigkeit, so daß aufgrund der beschränkten Beschleunigungsmöglichkeiten des verwendeten elektrischen Antriebs ein ordnungsgemäßes Absenken der aktuell verfahrenen Vorschubgeschwindigkeit auf die programmierte Geschwindigkeit des Folgesatzes nicht mehr möglich ist. Dieses geschilderte Problem verstärkt sich noch, wenn bei einer verwendeten Geschwindigkeitsführung eine weitere Möglichkeit der Geschwindigkeitsbeeinflussung durch einen Vorschub-Override vorgesehen ist. Da es ein solcher gestattet, den programmierten Absolutvorschub proportional im Bereich von 0 bis beispielsweise 200 % zu variieren, um sich geänderten technologischen Gegebenenheiten während der Bearbeitung anpassen zu können, so stellt sich aufgrund des physikalischen Zusammenhanges, wonach der erforderliche Bremsweg quadratisch mit zunehmender Geschwindigkeit ansteigt, sich also bei einer Verdopplung der Geschwindigkeit der Bremsweg vervierfacht, das obengeschilderte Problem verstärkt. Selbst wenn bei einer Geschwindigkeitsführung nach Sollgeschwindigkeitprofil bei 100% Override innerhalb der aktuellen Satzlänge eine Reduzierung des aktuellen Vorschubes auf einen niedrigeren programmierten Geschwindigkeitswert des Folgesatzes möglich ist, so kann gerade eine Vergrößerung des Override-Wertes und die damit verbundene quadratische Verlängerung des Bremsweges ein ordnungsgemäßes Abbremsen unmöglich machen. Da eine Berücksichtigung solcher Override-Werte vor allem bei satzübergreifend arbeitenden Geschwindigkeitsführungen einen hohen Rechenbedarf zur Folge hat, ist man bestrebt, eine Geschwindigkeitsführung so auszugestalten, daß eine satzübergreifend arbeitende Steuerung auch in einem beliebigen Override-Bereich schnell und zuverlässig arbeitet.

Es ist bekannt, daß herkömmliche Verfahren der eingangs genannten Art zur Geschwindigkeitsführung, welche satzübergreifend arbeiten und einen eventuell vorhandenen Override-Wert berücksichtigen, in der Regel entweder nur einen einzigen Folgesatz betrachten (siehe dazu die Siemens-Steuerung SINUMERIK 840 C) oder aber im Satzübergriff lediglich das vorgegebene programmierte Sollgeschwindigkeitsprofil bei 100% Override berücksichtigen. Damit ist zum einen ein vorausschauendes Bremsen über mehrere Sätze nicht möglich oder aber wird im zweiten Fall der sinnvoll abdeckbare Override-Bereich sehr stark eingeschränkt. Beide standardgemäß eingesetzten Verfahren haben somit den Nachteil, daß die Leistungsfähigkeit des verwendeten elektrischen Antriebes in der Regel nur begrenzt ausgenutzt werden kann.

Der Erfindung liegt daher die Aufgabe zugrunde, ein Verfahren zur vorausschauenden satzübergreifend arbeitenden Geschwindigkeitsführung von elektrischen Antrieben so auszugestalten, daß die im folgenden genannten Vorteile erreicht werden können. Es sollen mehrere Folgesätze vorausschauend betrachtet werden und gleichzeitig im Satzübergriff das Sollgeschwindigkeitsprofil für einen beliebigen Override-Bereich berücksichtigt werden, so daß die Leistungsfähigkeit eines verwendeten elektrischen Antriebes besser genutzt werden kann.

Gemäß der Erfindung wird diese Aufgabe durch folgende Merkmale gelöst:

1.1 in einer vorausschauenden Ermittlung und Analyse der zur zuverlässigen Reduzierung auf den programmierten Vorschub erforderlichen Bremsanforderungen mehrerer folgender Steuerungsdatensätze werden die Grenzbedingungen wie zulässige Bahnbeschleunigung, Ruckbegrenzung und Satzlänge auf die erforderliche Bremsstrecke abgebildet, so daß die jeweils kürzeste ermittelte Bremsrampe die Grenzbedingung repräsentiert,
1.2 diese vorausschauende Satzanalyse wird für mehrere parametrierbare Overrideeckwerte durchgeführt,
1.3 die daraus resultierenden erforderlichen Bremsrampen für die jeweiligen Overrideeckwerte werden jedem analysierten Steuerungsdatensatz als Kenndaten zugeordnet,
1.4 in einer Geschwindigkeitsvorgabe wird gemäß einem tatsächlich vorgegebenen aktuellen Overridewert zwischen den ermittelten Kenndaten interpoliert und daraus die zur Verhinderung eines zu schnellen Verfahrens in den Folgesatz erforderliche tatsächliche Satzendgeschwindigkeit bestimmt.

Eine erste vorteilhafte Ausgestaltung der vorliegenden Erfindung, welche die Anzahl der vorausschauend zu lesenden Steuerungsdatensätze bei gleichbleibender Leistungsfähigkeit auf ein sinnvolles Maß begrenzt, ist durch folgendes Merkmal gekennzeichnet:

2.1 die Anzahl der vorausschauend zu analysierenden Steuerungsdatensätze wird jeweils um einen Datensatz erhöht, dieser wird aufbereitet, dann werden von diesem neu präparierten Datensatz aus die bereits präparierten Datensätze soweit zurückbetrachtet bis vom einen auf den davorliegenden anderen Datensatz eine gleich große oder niedrigere Geschwindigkeit als die mit einem Overrideeckwert gewichtete programmierte Sollgeschwindigkeit auftritt und schließlich dafür eine Bremsrampe ermittelt.

Eine weitere besonders vorteilhafte Ausprägung der vorliegenden Erfindung zeichnet sich dadurch aus, daß sie auf einen bevorzugt vom Anwender genutzten Override-Bereich angepaßt werden kann. Diese besitzt folgendes Merkmal:

3.1 die Anzahl und Werte der zugrundegelegten Overrideeckwerte lassen sich an einen gewünschten Overridebereich anpassen.

Eine weitere besonders vorteilhafte Ausprägung der vorliegenden Erfindung nutzt die bereits in den Merkmalen 1.1 bis 1.4 durchgeführten Berechnungen und die damit erzielten Ergebnisse, indem sie einen für die Geschwindigkeitsführung sinnvollen Overridewert zur Einstellung vorschlägt. Diese ist gekennzeichnet durch folgende Merkmale:

4.1 anhand vorgegebener Grenzbedingungen wie Bahnbeschleunigung, Ruckbegrenzung und Satzlänge bestimmt die Geschwindigkeitsführung selbsttätig den für eine vorausschauende Satzanalyse sinnvollsten untersten Overridewert gemäß dem über den aktuellen Satz auf den gewünschten Folgesatzvorschub gebremst werden kann,
4.2 die erforderlichen Bremsrampen werden nur für solche Overrideeckwerte ermittelt, die größer oder gleich dem sinnvollsten untersten Overridewert sind.

Eine andere besonders vorteilhafte Ausprägung der vorliegenden Erfindung erweitert die Einsatzfähigkeit und steigert somit die Flexibilität, indem sie unterschiedliche Arten einer Vorschubvorgabe zum Einsatz für das erfindungsgemäße Verfahren zuläßt. Dieses ist gekennzeichnet durch folgendes Merkmal:

5.1 das Verfahren arbeitet neben einer Vorschubvorgabe als Vorschubgeschwindigkeit auch mit einer solchen als Umdrehungsvorschub, indem ein möglicher Spindeldrehzahlbereich bei den parametrierten Overrideeckwerten mitberücksichtigt wird,
5.2 der tatsächlich gegebene Overridewert wird mit einem Faktor aus Istdrehzahl und Solldrehzahl korrigiert.

Eine vorteilhafte Vorrichtung zur Durchführung des Verfahrens gemäß der vorliegenden Erfindung zeichnet sich dadurch aus, daß sie mit einfachen Mitteln und begrenztem Aufwand effektiv realisiert wird. Diese Vorrichtung besitzt folgende Merkmale:

6.1 die Vorrichtung beinhaltet eine Vorverarbeitungseinheit zur vorausschauenden Satzanalyse, in die Satzdaten und Maschinendaten eingespeist werden,
6.2 in einem Datenspeicher werden parametrierbare Overrideeckwerte eingespeichert und der Vorverarbeitungseinheit zur vorausschauenden Satzanalyse zur Verfügung gestellt,
6.3 in einem weiteren Datenspeicher werden von der Vorverarbeitungseinheit zur vorausschauenden Satzanalyse ermittelte Bremsrampen für mehrere Overrideeckwerte für eine Anzahl von Folgedatensätzen abgespeichert,
6.4 in einen auf diesen Datenspeicher folgenden Interpolator wird ein tatsächlicher Overridewert eines Overridereglers geführt, anhand dessen Wertes aus den Daten des Datenspeichers eine auf den tatsächlichen Overridewert zugeschnittene Bremsrampe interpoliert wird.

Die mit der Erfindung erzielten Vorteile bestehen insbesondere darin, daß die Leistungsfähigkeit des eingesetzten elektrischen Antriebes auch bei Verwendung beliebiger Override-Werte zu jeder Zeit, beispielsweise bei Einsatz in einer numerischen Steuerung während des Ablaufs des zugrundeliegenden Teileprogramms, voll ausgenutzt wird und darüber hinaus besonders zuverlässig arbeitet. Eine vorausschauende Satzanalyse erfolgt nicht nur für einen Folgesatz, sondern für eine Vielzahl davon. Sie wird darüber hinaus nicht lediglich auf das Sollgeschwindigkeitsprofil, sondern auch für mehrere Overridewerte durchgeführt. Hinzu kommt, daß sich die aufgeführten Vorteile mit vorliegender Erfindung besonders effektiv und kostengünstig realisieren lassen.

Ein Ausführungsbeispiel der Erfindung ist in der Zeichnung dargestellt und wird im folgenden näher erläutert. Dabei zeigen:

FIG 1   Geschwindigkeitsverlauf über mehrere Steuerungsdatensätze für unterschiedliche Overridewerte und dadurch bedingter Verlauf des entsprechend ermittelten Bremsprofils,

FIG 2    Blockschaltbild einer numerischen Steuerung mit satzübergreifender Geschwindigkeitsführung für einen beliebigen Overridebereich.

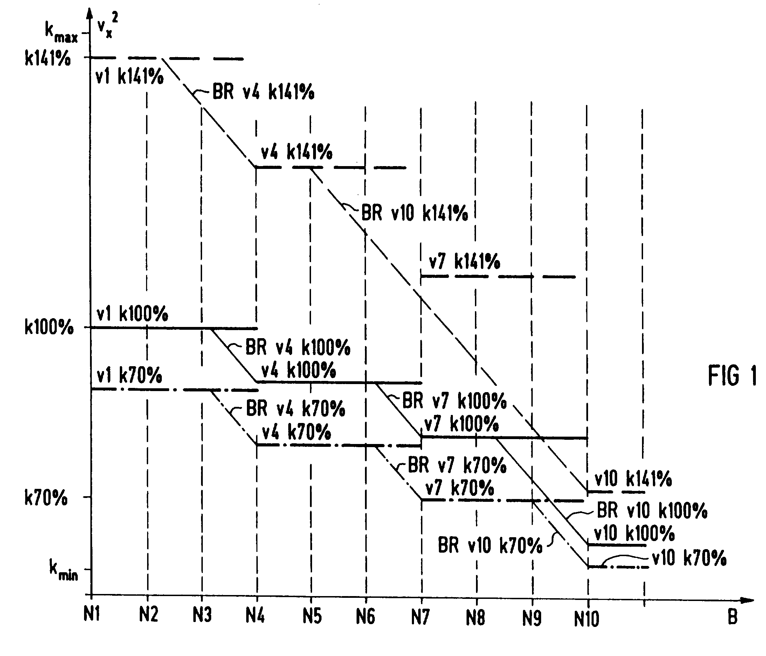

In der Darstellung gemäß FIG 1 ist ein Diagramm gezeigt, welches den programmierten Geschwindigkeitsverlauf über zehn Steuerungsdatensätze für verschiedene eingestellte Override-Bereiche beschreibt. Auf der Abszisse sind die einzelnen Steuerungssätze N1...N10 über die Bahnlänge B aufgetragen, die Ordinate zeigt den Geschwindigkeitsverlauf $V^2_X$, wobei die Maschinenachse in X-Dimension exemplarisch aus den weiteren verwendeten Maschinenachsen ausgewählt wurde. Der Geschwindigkeitsverlauf $V^2_X$ ist quadriert aufgetragen, um der besseren Übersichtlichkeit halber in Bezug auf den Bremsweg linear skizziert werden zu können. Der Geschwindigkeitsverlauf ist zum einen in Form des programmierten Sollgeschwindigkeitsprofils mit einem Override-Wert von 100% durch den Verlauf k100% in Form einer durchgezogenen Linie gezeigt. Der Geschwindigkeitsverlauf k141% zeigt denselben Verlauf mit einem Override von 141% in Form einer gestrichelten Kurve. Ein dritter Geschwindigkeitsverlauf für einen geringeren Override, hier exemplarisch anhand eines Overrides von 70% dargestellt, zeigt k70% und wird durch eine strichpunktierte Linie dargestellt. Die Geschwindigkeit wird beispielhaft unabhängig vom jeweils betrachteten Override-Wert so geführt, daß diese von Satz N1 bis N3 konstant verläuft, von Satz N4 bis N6 auf einem niedrigerem Niveau ebenfalls konstant verläuft, von Satz N7 bis N9 wiederum mit einem niedrigeren Geschwindigkeitswert konstant verläuft und schließlich in Satz N10 noch einmal weiter abgesenkt wird. Die genannten Geschwindigkeitsteilabschnitte werden jeweils in Abhängigkeit des Satzes bezeichnet, bei dem der nächste konstante Geschwindigkeitsabschnitt beginnt. Den programmierten Sollgeschwindigkeitsverlauf des Override 100% sind dies die Geschwindigkeiten v1k100%, v4k100%, v7k100%, v10k100%. Für die beiden anderen betrachteten Override-Werte sind die dargestellten Geschwindigkeitsverläufe bezeichnet mit v1k141%, v4k141%, v7k141%, v10k141%, für den betrachteten größeren Override 141% sowie für den Geschwindigkeitsverlauf mit geringerem Override von 70% mit v1k70%, v4k70%, v7k70% und v10k70%. Die erforderlichen Bremsrampen für die jeweils betrachteten Overridewerte eines Geschwindigkeitsverlaufes sind als abfallende Linearabschnitte dargestellt. Dabei handelt es sich zur besseren Veranschaulichung um einen Sonderfall, in dem bei allen Geschwindigkeiten mit der gleichen Beschleunigung gebremst wird. Dies ist jedoch keine Bedingung, denn in der Praxis kann erfindungsgemäß für jeden Satz eine andere Beschleunigung auftreten.

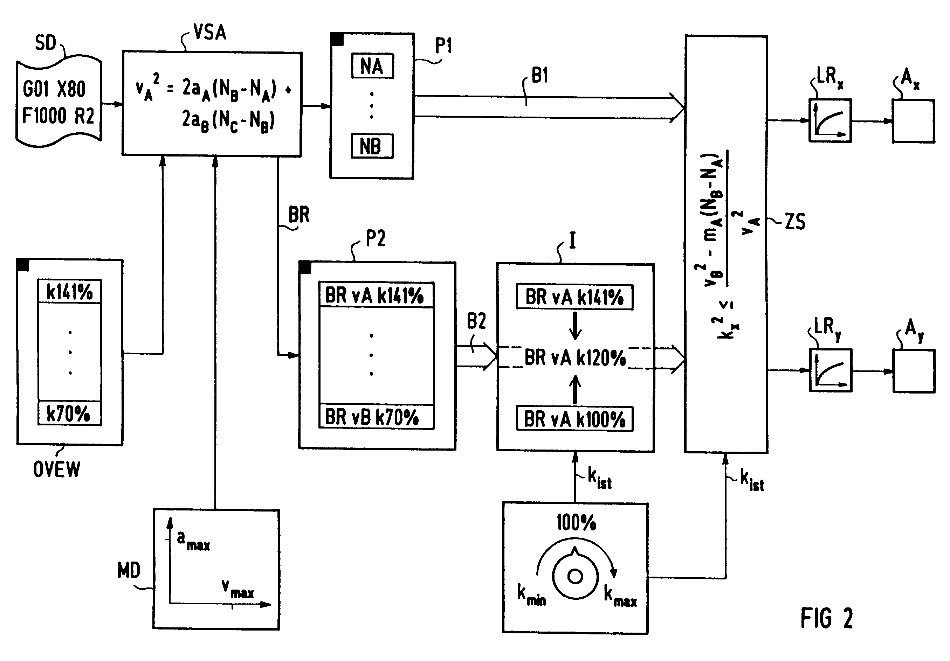

In der Darstellung in FIG 2 ist ein Blockschaltbild gezeigt, in dem eine Vorrichtung zur Durchführung des erfindungsgemäßen Verfahrens realisiert ist. Dabei gelangen die Steuerungsdaten SD in eine Vorverarbeitungseinheit zur vorausschauenden Satzanalyse VSA. Letzterer werden die in einem Datenspeicher OVEW eingespeicherten Overrideeckwerte sowie die Maschinendaten MD zugeführt, welche die Grenzbedingungen wie maximal zulässige Bahngeschwindigkeit $V_{max}$ und maximal zulässige Bahnbeschleunigung $a_{max}$ enthalten. In der Vorverarbeitungseinheit zur vorausschauenden Satzanalyse VSA werden zum einen die Informationen der vorausschauend analysierten Datensätze N1...N10 ermittelt und in einen Datenspeicher P1 eingespeichert und zum anderen die für jeden in OVEW enthaltenen Overrideeckwert für die vorausschauend analysierten Folgesätze N1...N10 ermittelte möglichst kurze Bremsrampe BR in einen weiteren Datenspeicher P2 eingespeichert. Die analysierten Satzdaten N1...N10 aus P1 gelangen über einen Datenbus B1 zur zentralen Steuerungseinheit ZS. Die Bremsrampeninformationen BR gelangen über einen weiteren Datenbus B2 zu einer Interpolationseinheit I, in die auch aktuelle Override-Istwerte $k_{ist}$ eines oder mehrerer Overrideregler OVR gelangen. Anhand von $k_{ist}$ wird in I eine auf den aktuellen Override bezogene Bremsrampe mit Hilfe der in P2 enthaltenen Daten interpoliert und über den durch I durchgeschleiften Datenbus B2 zur zentralen Steuerungseinheit ZS geführt, zu der ebenfalls die Override-Istwerte $k_{ist}$ von eventuell mehreren vorhandenen Achsen geführt werden. Von dort gelangen die generierten Achssollwerte für jede Achse in einen entsprechenden Lageregler LRx bzw. LRy und von dort zum elektrischen Antrieb Ax bzw. Ay.

Um eine Geschwindigkeitsführung zu realisieren, die gemäß der vorliegenden Erfindung einen Satzübergriff für jeden beliebigen Override-Bereich ermöglicht, wird das vorausschauende Lesen von Steuerungsdatensätzen SD, auch als Look ahead bezeichnet, in zwei Bereiche gegliedert. Am Anfang, auch als Präparation bezeichnet, steht eine vorausschauende Analyse der erforderlichen Bremsanforderungen mehrerer Steuerungsdatensätze N1...N10. In einem zweiten Schritt schließt sich eine aktuelle Geschwindigkeitsvorgabe für das Satzende unter Berücksichtigung eines aktuellen Overrides an. In einem ersten Schritt erfolgt somit eine vorausschauende Satzanalyse, in der die nötigen Bremsanforderungen bestimmt werden, indem alle Grenzbedingungen wie zulässige Bahnbeschleunigung, Bahngeschwindigkeit, eine eventuell vorgesehene Ruckbegrenzung und auch die Satzlänge auf die zu ermittelnde Bremsstrecke abgebildet werden und die so ermittelte jeweils kürzeste Bremsrampe BR selbst die Grenzbedingung bildet. Da diese so zu ermitteln Bremsanforderungen jedoch nicht nur für das Sollgeschwindigkeitsprofil bei k100% Override ermittelt werden sollen, sondern die vorausschauende Satzanalyse auch bei einem beliebigen Override-Bereich durchzuführen sein soll, wird der jeweils unterschiedliche Einfluß eines eingestellten Override-Wertes auf die nötigen Bremsanforderungen berücksichtigt. Die erforderlichen Bremsanforderungen werden daher nicht lediglich für einen Override des Sollgeschwindigkeitsprofils k100% ermittelt, sondern auch für weitere parametrierbare Overrideeckwerte. In dem ausgeführten Beispiel sind dies ein Override k141% und ein Override k70%. In der Praxis wird jedoch eine Reihe weiterer Overrideeckwerte vorgegeben werden, so z.B. bei 50%, 70%, 100%, 120%, 141% etc. Das Raster der abgedeckten Overrideeckwerte ist jeweils vom Anwendungsfall und der zu erreichenden Genauigkeit abhängig. Dabei kann die Anzahl und der Wert der Overrideeckwerte an einen vom Bediener gewünschten Override-Bereich angepaßt werden. Zur Ermittlung der erforderlichen Bremsanforderungen wird jeweils der folgende Datensatz analysiert und präpariert. Anschließend werden jeweils so viele davorliegende Steuerungsdatensätze gelesen, bis bei einem Vergleich des jeweils aktuellen präparierten Datensatzes mit dem davorliegenden entweder eine gleich große oder eine niedrigere Geschwindigkeit als die momentan betrachtete Geschwindigkeit gefunden wird. Diese Geschwindigkeit bestimmt sich aus der mit dem betrachteten Overrideeckwert k141%...k70% multiplizierten Sollgeschwindigkeit. Anhand der Anzahl der so analysierten Datensätze können mit Hilfe dieser Informationen die Bremsrampen ermittelt werden.

Eine weiter "in der Zukunft" liegende Geschwindigkeit $v_A$ ist für die Satzendgeschwindigkeit im aktuellen Satz dann von Bedeutung, wenn diese Geschwindigkeit entweder niedriger ist als die im davorliegenden aktuellen Satz, oder aber wenn der Override $k_{AB}$ so groß ist, daß aufgrund der quadratischen Abhängigkeit zwischen overridebedingter Geschwindigkeit und Bremsweg eine andere Restriktion relevant wird, indem die Geschwindigkeit $v_B$ eines noch weiter "in der Zukunft" liegenden Satzes relevant wird. In diesem Fall kann eine Anpassung der bereits ermittelten Bremsrampe erforderlich werden. Dieser Zusammenhang läßt sich anhand folgender Berechnungsvorschrift verdeutlichen:

$$k_x^2 \, v_A^2 \leq v_B^2 - m_A \, (N_B - N_A) \qquad\qquad (1)$$

mit

A = Beginn eines Folgesatzes,
B = Ende eines weiteren Folgesatzes,
$v_A$ = Geschwindigkeit im Bahnpunkt A,
$v_B$ = Geschwindigkeit im Bahnpunkt B,
$m_A$ = negative zulässige Bahnbeschleunigung als Grenzbedingung im Satz von A nach B,
$N_A$ = Ort des Beginns eines Folgesatzes auf der Bahnkurve,
$N_B$ = Ort des Endes des Folgesatzes auf der Bahnkurve, mit
$k_x$ = betrachteter Overrideeckwert.

Um den unterschiedlichen Einfluß des verwendeten Override-Wertes darzustellen, löst man diese Berechnungsvorschrift nach dem Overridefaktor auf. Daraus ergibt sich:

$$k_x^2 \leq \frac{v_B^2 - m_A \, (N_B - N_A)}{v_A^2} \qquad\qquad (2)$$

Ist diese Bedingung für den jeweils zu untersuchenden Overrideeckwert erfüllt, so bestimmt sich die Satzendgeschwindigkeit des aktuellen Datensatzes durch die Eintrittsgeschwindigkeit $v_A$ des darauffolgenden Steuerungsdatensatzes. Andernfalls bestimmt die Eintrittsgeschwindigkeit des vom aktuellen Steuerungsdatensatz aus gesehenen übernächsten Folgesatzes $v_B$ die Satzendgeschwindigkeit des aktuellen Steuerungsdatensatzes. Je nach Anzahl der vorausschauend satzübergreifend zu lesenden nächsten Folgesätze werden die Overrideeckwerte auf die obengenannte Bedingung überprüft. Ein Beispiel für den erstgenannten Fall, in dem sich die Satzendgeschwindigkeit eines aktuellen Steuerungsdatensatzes durch die Eintrittsgeschwindigkeit des darauffolgenden Satzes A ergibt, wird in FIG 1 am programmierten Sollgeschwindigkeitsverlauf mit Override k100% verdeutlich. So wird beispielsweise der Verlauf der Bremsrampe BRv7k100% im Steuerungsdatensatz N6 durch die auf die momentane Geschwindigkeit v4k100% folgende Geschwindigkeit v7k100% bedingt. Dies liegt daran, daß für den Override von 100% die Möglichkeit besteht, mit der die Grenzbedingungen repräsentierenden kürzesten Bremsrampe BRv7k100% innerhalb des Datensatzes N6 auf die Eintrittsgeschwindigkeit des darauffolgenden Datensatzes N7 abzubremsen. Dieser Zusammenhang läßt sich auch der Bezeichnung der eben zitierten Bremsrampe entnehmen. Anders hingegen sieht es aus, wenn man sich den Geschwindigkeitsverlauf für einen Override k141% betrachtet. So wird der Verlauf der Bremsrampe BRv10k141%, welche von der Geschwindigkeit v4k141% ausgeht, nicht durch die im Folgesatz N7 auftretende Geschwindigkeitsänderung v7k141% bedingt, sondern durch die Eintrittsgeschwindigkeit v10k141% des weiter "in der Zukunft" liegenden Folgesatzes N10. Das liegt daran, daß bei einem gegenüber dem Sollgeschwindigkeitsprofil vorgesehenen höher liegenden Override, im Beispiel k141%, die Bahnlänge der mit der Geschwindigkeit v7k141% verfahrenen Steuerungsdatensätze N7, N8 und N9 nicht ausreicht, um unter Zugrundelegung der zulässigen Bahnbeschleunigung auf die im Steuerungsdatensatz N10 erforderliche Eintrittsgeschwindigkeit v10k141% abzubremsen, was einer Vorgabe von v10k141% als Satzendgeschwindigkeit für den Datensatz N9 entspricht.

Anders hingegen stellt sich dieser Zusammenhang beim programmierten Sollgeschwindigkeitsverlauf des Overridewertes k100% dar. Aufgrund der kleineren verfahrenen Geschwindigkeit ist der für das Abbremsen erforderliche Bremsweg, welcher quadratisch von der Geschwindigkeit abhängt, entsprechend kürzer, so daß direkt von v7k100% auf v10k100% abgebremst werden kann. Allein die Wahl des Overrides entscheidet demnach darüber, nach welchem der vorausschauend zu analysierenden Steuerungsdatensätze sich die zu bestimmende erforderliche Satzendgeschwindigkeit eines aktuell abgefahrenen Datensatzes richtet. Aus diesem Grunde werden gemäß der vorliegenden Erfindung nicht nur die erforderliche Bremsanforderung für das Sollgeschwindigkeitsprofil ermittelt, sondern auch für mehrere parametrierbare Overrideeckwerte.

Die für den jeweiligen Overrideeckwert erforderlichen Bremsrampen bestimmen sich nach folgender Vorschrift, wobei in diesem Beispiel der Einfachheit halber lediglich zwei Folgesätze vorausschauend analysiert werden.

$$v_A^2 = -m_A(N_B - N_A) - m_B(N_C - N_B) \tag{3}$$

mit A,B,C = aufeinanderfolgende Sätze
mit $m_i$ = negative Steigung bzw. negative Beschleunigung im Datensatz i
mit $N_i$ = Anfangspunkt des Datensatzes i auf der Bahnlänge.

Setzt man für die negative Steigung:

$$m_i = -2a_i \tag{4}$$

so ergibt sich daraus für die Berechnungsvorschrift:

$$v_A^2 = 2a_A(N_B - N_A) + 2a_B(N_C - N_B) \tag{5}$$

Mit der Norm-Beschleunigung a gilt:

$$a_i = p_i a \tag{6}$$

Daraus folgt für die Berechnungsvorschrift:

$$v_A^2 = 2p_A a(N_B - N_A) + 2p_B a(N_C - N_B) \tag{7}$$

Um die Bremsrampen der besseren Übersichtlichkeit halber in FIG 1 linear darstellen zu können, wird die genannte Berechnungsvorschrift normiert durch:

$$(N_B - N_A) = 1/p_i \, (N_B - N_A)' \tag{8}$$

Die daraus resultierenden erforderlichen Bremsrampen für die jeweiligen Overrideeckwerte k141%, k70% usw. werden als Kenndaten in Form von Stützpunkten jedem Datensatz N1...N10 mitgegeben.

In der zweiten Phase der vorliegenden Erfindung mit vorausschauender Satzanalyse für einen beliebigen Override-Bereich, dem eigentlichen Hauptlauf, wird in der aktuellen Geschwindigkeitsvorgabe am Satzende unter Einbeziehung des aktuellen Override-Wertes zwischen den Kenndaten der abgespeicherten Bremsrampen für die Overrideeckwerte gemäß dem tatsächlich vorgegebenen Overridewert $k_{ist}$ interpoliert und so die erforderliche Satzendgeschwindigkeit bestimmt, welche sicherstellt, daß nicht zu schnell in den Folgesatz gefahren wird. Die Interpolation erfolgt nach folgender Berechnungsvorschrift:

$$\frac{(k_{ist}^2 - k100\%^2) \cdot (v_{x+1}^2 - v100\%^2)}{(k_{x+1}^2 - k100\%^2)} + v100\%^2 = v_{ist}^2 \tag{9}$$

Anhand der zulässigen Bahnbeschleunigung, Bahngeschwindigkeit und auch Satzlänge bestimmt die Steuerung den sinnvollsten untersten Override-Wert $k_{min}$ selbsttätig, also den Override-Wert gemäß dem über den Satz auf den gewünschten Folgesatzvorschub gebremst werden kann. Da ein kleinerer Override-Wert in der Regel keine vorausschauende Satzanalyse erfordert, werden die Bremsrampen nur soweit wie nötig ermittelt. Dies ist demnach immer dann der Fall, wenn der aktuelle Override-Wert $k_{ist}$ größer oder gleich dem sinnvollsten untersten Override-Wert $k_{min}$ ist. Dies bewirkt einen Zeitgewinn in der Präparation, da nicht alle vom Benutzer parametrisierten Eckwerte berücksichtigt werden, sondern lediglich solche, für die eine Ermittlung der Bremsrampen BR Sinn macht. Ist immer der gleiche Vorschub programmiert, entsteht so durch die Berücksichtigung der Bremsrampen nur ein unwesentlicher Mehraufwand.

Berücksichtigt man bei den parametrierten Overrideeckwerten einen möglichen Spindeldrehzahlbereich, so läßt sich das obengeschilderte Verfahren anstelle mit einer Vorschubgeschwindigkeit als Vorschubvorgabe auch mit einer Vorschubvorgabe als Umdrehungsvorschub durchführen. Dazu wird die Drehzahl auf einen Faktor abgebildet, der sich aus dem Verhältnis aus Ist-Drehzahl $n_{ist}$ und der in den Satzdaten SD programmierten Solldrehzahl n100% bildet, um auch hierbei mit den nach oben dargestelltem Verfahren ermittelten Bremsrampen BR arbeiten zu können. Der tatsächlich vorhandene Override-wert kist wird nach folgender Berechnungsvorschrift mit dem ermittelten Faktor korrigiert:

$$k_{korr} = k_{ist} \cdot \frac{n_{ist}}{n100\%} \tag{10}$$

In einer möglichen Vorrichtung zur Durchführung des beschriebenen erfindungsgemäßen Verfahrens werden die parametrierbaren Overrideeckwerte k141%...k70% in einen Datenspeicher OVEW abgelegt und werden einer Vorverarbeitungseinheit zur vorausschauenden Satzanalyse VSA zugeführt. Der Vorverarbeitungseinheit zur vorausschauenden Satzanalyse VSA werden außerdem die Maschinendaten MD wie beispielsweise maximal zulässige Bahngeschwindigkeit $V_{max}$ und Bahnbeschleunigung $a_{max}$ zur Verfügung gestellt, die die Grenzbedingungen darstellen, welche auf die in der Vorverarbeitungseinheit zur vorausschauenden Satzanalyse VSA zu ermittelnden erforderlichen Bremsanforderungen abgebildet werden. Dabei können auch Werte aus beispielsweise einer Maßnahme zur Ruckbegrenzung Berücksichtigung finden. Mit Hilfe dieser Informationen werden in der Vorverarbeitungseinheit zur vorausschauenden Satzanalyse VSA die für die in OVEW eingespeicherten Overrideeckwerte erforderlichen Bremsrampen BR nach den Gleichungen (3) bis (8) vorausschauend für mehrere Folgesätze N1...N10 ermittelt und in einem Datenspeicher P2 abgelegt. Daneben kann die Vorverarbeitungseinheit zur vorausschauenden Satzanalyse VSA noch weitere Funktionen zur Vorverarbeitung der analysierten Datensätze SD übernehmen, indem beispielsweise bereits an dieser Stelle wichtige Bahnparameter berechnet werden. Die so ermittelten Daten der analysierten Folgesätze N1...N10, deren Anzahl je nach Anwendungsfall differieren kann und in der Regel im Bereich von 5 bis 50 Sätze liegt, werden in einem anderen Datenspeicher P1 eingespeichert. Von dort gelangen sie über einen Datenbus B1 zur weiteren Verarbeitung zur zentralen Steuerung ZS. In einem Sonderfall können vorverarbeitete Bahnparameter und ermittelte Bremsrampen auch in einem einzigen Datenspeicher abgelegt werden, wenn Stützstellen des programmierten Sollgeschwindigkeitsprofils mit den darauf angewandten Bremsrampen abgespeichert werden. Im weiter oben beschriebenen Ausführungsbeispiel werden allein die ermittelten erforderlichen Bremsrampen BR über einen zweiten Datenbus B2 zu einer Interpolationseinheit I geführt.

Zu der Interpolationseinheit I gelangen auch eventuell vorhandene tatsächlich eingestellte Overridewerte $k_{ist}$ von einem oder mehreren Overridereglern OVR. In dem Blockschaltbild in FIG 2 ist der besseren Übersichtlichkeit halber lediglich ein Overrideregler OVR dargestellt. Anhand von $k_{ist}$ erfolgt in I eine Interpolation zwischen den in P2 eingespeicherten nächstkommenden Bremsrampen BR. Die so ermittelten Bremsverläufe für die vorausschauend analysierten Datensätze N1...N10 werden über den durch I durchgeschleiften Datenbus B2 ebenfalls zur zentralen Steuerung ZS geführt, wo die erforderliche Satzendgeschwindigkeit gemäß der oben dargestellten Berechnungsvorschriften (1) und (2) ermittelt wird. Der zentralen Steuerung ZS werden dazu ebenfalls eventuell vorhandene aktuelle Override-Istwerte $k_{ist}$ zugeführt. In ZS schließlich werden die Achssollwerte zur Ansteuerung der zu verfahrenden Achsen erzeugt. Für den Fall zweier Achsen in x- und y-Richtung gelangen somit Achssollwerte zu jeweils einem Lageregler LRx bzw. LRy und von dort jeweils zum entsprechenden elektrischen Antrieb Ax bzw. Ay.

**Patentansprüche**

1. Verfahren zur vorausschauenden satzübergreifend arbeitenden Geschwindigkeitsführung von elektrischen Antrieben, **gekennzeichnet** durch folgende Merkmale:

   1.1 in einer vorausschauenden Ermittlung und Analyse der zur zuverlässigen Reduzierung auf den programmierten Vorschub erforderlichen Bremsanforderungen mehrerer folgender Steuerungsdatensätze (N1...N10) werden die Grenzbedingungen (MD) wie zulässige Bahnbeschleunigung ($a_{max}$), Ruckbegrenzung und Satzlänge auf die erforderliche Bremsstrecke (BR) abgebildet, so daß die jeweils kürzeste ermittelte Bremsrampe (BR) die Grenzbedingung repräsentiert,
   1.2 diese vorausschauende Satzanalyse wird für mehrere parametrierbare Overrideeckwerte (OVEW, k141%...k70%) durchgeführt,
   1.3 die daraus resultierenden erforderlichen Bremsrampen für die jeweiligen Overrideeckwerte (BRv4k141%... BRv10k70%) werden jedem analysierten Steuerungsdatensatz (N1...N10) als Kenndaten zugeordnet,
   1.4 in einer Geschwindigkeitsvorgabe wird gemäß einem tatsächlich vorgegebenen aktuellen Overridewert ($k_{ist}$) zwischen den ermittelten Kenndaten (BRv4k141%... BRv10k70%) interpoliert und daraus die zur Verhinderung eines zu schnellen Verfahrens in den Folgesatz erforderliche tatsächliche Satzendgeschwindigkeit bestimmt.

2. Verfahren nach Anspruch 1, **gekennzeichnet** durch folgendes Merkmal:

   2.1 die Anzahl der vorausschauend zu analysierenden Steuerungsdatensätze (N1...N10) wird jeweils um einen Datensatz erhöht, dieser wird aufbereitet, dann werden von diesem neu präparierten Datensatz aus die bereits präparierten Datensätze soweit zurückbetrachtet bis vom einen auf den davorliegenden anderen Datensatz eine gleich große oder niedrigere Geschwindigkeit als die mit einem Overrideeckwert (k141%...k70%) gewichtete programmierte Sollgeschwindigkeit auftritt und schließlich dafür eine Bremsrampe ermittelt.

3. Verfahren nach einem oder mehreren der vorstehenden Ansprüche, **gekennzeichnet** durch folgendes Merkmal:

   3.1 die Anzahl und Werte der zugrundegelegten Overrideeckwerte (OVEW,k141%...k70%) lassen sich an einen gewünschten Overridebereich anpassen.

4. Verfahren nach einem oder mehreren der vorstehenden Ansprüche, **gekennzeichnet** durch folgende Merkmale:

   4.1 anhand vorgegebener Grenzbedingungen (MD) wie Bahnbeschleunigung, Ruckbegrenzung und Satzlänge bestimmt die Geschwindigkeitsführung selbsttätig den für eine vorausschauende Satzanalyse sinnvollsten untersten Overridewert ($k_{min}$) gemäß dem über den aktuellen Satz auf den gewünschten Folgesatzvorschub gebremst werden kann,
   4.2 die erforderlichen Bremsrampen werden nur für solche Overrideeckwerte (OVEW,k141%...k70%) ermittelt, die größer oder gleich dem sinnvollsten untersten Override-wert ($k_{min}$) sind.

5. Verfahren nach einem oder mehreren der vorstehenden Ansprüche, **gekennzeichnet** durch folgende Merkmale:

   5.1 das Verfahren arbeitet neben einer Vorschubvorgabe als Vorschubgeschwindigkeit auch mit einer solchen als Umdrehungsvorschub, indem ein möglicher Spindeldrehzahlbereich bei den parametrierten Overrideeckwerten (OVEW,k141%...k70%) mitberücksichtigt wird,
   5.2 der tatsächlich gegebene Overridewert ($k_{ist}$) wird mit einem Faktor aus Istdrehzahl ($n_{ist}$) und Solldrehzahl ($n_{Soll}$) korrigiert.

6. Vorrichtung zur Durchführung des Verfahrens nach einem oder mehreren der vorstehenden Ansprüche, **gekennzeichnet** durch folgende Merkmale:

   6.1 die Vorrichtung beinhaltet eine Vorverarbeitungseinheit zur vorausschauenden Satzanalyse (VSA), in die Satzdaten (SD) und Maschinendaten (MD) eingespeist werden,
   6.2 in einem Datenspeicher (OVEW) werden parametrierbare Overrideeckwerte eingespeichert und der Vorverarbeitungseinheit zur vorausschauenden Satzanalyse (VSA) zur Verfügung gestellt,
   6.3 in einem weiteren Datenspeicher (P2) werden von der Vorverarbeitungseinheit zur vorausschauenden Satzanalyse (VSA) ermittelte Bremsrampen (BR) für mehrere Overrideeckwerte für eine Anzahl von Folgedatensätzen abgespeichert,

6.4 in einen auf diesen Datenspeicher (P2) folgenden Interpolator (I) wird ein tatsächlicher Overridewert ($k_{ist}$) eines Overridereglers (OVR) geführt, anhand dessen Wertes aus den Daten des Datenspeichers (P2) eine auf den tatsächlichen Overridewert ($k_{ist}$) zugeschnittene Bremsrampe interpoliert wird.

**Claims**

1. Method for the anticipatory speed control, effective over a plurality of blocks, of electric drives, characterized by the following features:

   1.1 in an anticipatory determination and analysis of the braking requirements of a plurality of subsequent control data blocks (N1...N10), which braking requirements are necessary for the reliable reduction to the programmed feed rate, the limiting conditions (MD) such as admissible track acceleration ($a_{max}$), rate of change limitation and block length are projected onto the necessary braking path (BR), so that the shortest braking ramp (BR) determined in each case represents the limiting condition,

   1.2 this anticipatory block analysis is carried out for a plurality of parametrable override transition values (OVEW,k141%...k70%),

   1.3 the resultant necessary braking ramps for the respective override transition values (BRv4k141%BRv10k70%) are assigned to each control data block (N1...N10) analysed as characteristic data,

   1.4 in presetting the speed, in accordance with an actually preset current override value ($k_{ist}$), an interpolation is carried out between the characteristic data (BRv4k141%...BRv10k70%) determined and from this the actual block final speed necessary to prevent excessively rapid travel in the subsequent block is determined.

2. Method according to Claim 1, characterized by the following feature:

   2.1 the number of control data blocks (N1...N10) to be analysed in anticipation is in each case incremented by one data block, the latter is prepared and then, starting from this newly prepared data block, the already prepared data blocks are considered back until, from one of the data blocks to the previous one, a speed occurs which is as large as or lower than the programmed intended speed weighted with an override transition value (k141%..,k70%), and finally determines a braking ramp therefor.

3. Method according to one or more of the preceding claims, characterized by the following feature:

   3.1 the number and values of the basic override transition value (OVEW,k141%..,k70%) may be adapted to a desired override range.

4. Method according to one or more of the preceding claims, characterized by the following features:

   4.1 using preset limiting conditions (MD) such as track acceleration, rate of change limitation and block length, the speed control automatically determines the most practical, lowest override value ($k_{min}$) for an anticipatory block analysis, according to which value braking to the desired subsequent block feed rate can take place via the current block,

   4.2 the necessary braking ramps are determined only for those override transition values (OVEW,k141%.., k70%) which are greater than or equal to the most practical, lowest override value ($k_{min}$).

5. Method according to one or more of the preceding claims, characterized by the following features:

   5.1 in addition to operating with a feed rate preset as feed rate speed, the method also operates with such a preset as rotation feed rate, in that a possible shaft rotational speed range is also taken into account in the parametrable override transition values (OVEW,k141%..,k70%), 5.2 the override value ($k_{ist}$) actually given is corrected using a factor taken from current rotational speed ($n_{ist}$) and intended rotational speed ($n_{soll}$).

6. Device for implementing the method according to one or more of the preceding claims, characterized by the following features:

   6.1 the device contains a preprocessing unit for the anticipatory block analysis (VSA), into which block data (SD) and machine data (MD) are feed,

6.2 parametrable override transition values are stored in a data store (OVEW) and made available to the preprocessing unit for the anticipatory block analysis (VSA),

6.3 braking ramps (BR) determined for a plurality of override transition values for a number of subsequent data blocks by the preprocessing unit for anticipatory block analysis (VSA) are stored in a further data store (P2),

6.4 in an interpolator (I) following this data store (P2) an actual override value ($k_{ist}$) is led to an override controller (OVR) and, using this value, a braking ramp tailored to the actual override value ($k_{ist}$) is interpolated from the data in the data store (P2).

**Revendications**

1. Procédé de commande de vitesse de dispositifs moteurs électriques par anticipation sur plusieurs blocs, ayant les caractéristiques suivantes :

   1.1 lors d'une détermination et d'une analyse anticipées des contraintes de freinage, nécessaires à la réduction sûre à l'avance programmée, de plusieurs blocs de données de commande suivants (N1 à N10), on applique les conditions limites (MD), comme l'accélération admissible ($a_{max}$), la limitation des secousses et la longueur de bloc, sur la distance de freinage nécessaire (BR) de telle sorte que la plus courte rampe de freinage (BR) déterminée représente la condition limite,

   1.2 on effectue cette analyse anticipée de bloc pour plusieurs valeurs typiques de correction pouvant être paramétrées (OVEW, k141 % à k70 %),

   1.3 à chaque bloc de données de commande analysé (N1 à N10), on associe comme données caractéristiques les rampes de freinage nécessaires résultantes pour les valeurs typiques de correction (BRv4k141 % à BRv10k70 %),

   1.4 lorsqu'une vitesse est prescrite, on interpole entre les données caractéristiques déterminées (BRv4k141 % à BRv10k70 %) selon une valeur de correction actuelle réellement prescrite ($k_{ist}$) et on détermine à partir de là la vitesse en fin de bloc réelle nécessaire pour empêcher un passage trop rapide dans le bloc suivant.

2. Procédé selon la revendication 1, ayant la caractéristique suivante :

   2.1 on augmente à chaque fois d'un bloc de données le nombre des blocs de données de commande (N1 à N10) à analyser par anticipation, on prépare ce bloc de données et on reconsidère ensuite à partir de ce nouveau bloc de données préparé les blocs de données déjà préparés jusqu'à ce qu'apparaisse, d'un bloc de données à un bloc de données suivant, une vitesse inférieure ou égale à la vitesse de consigne programmée pondérée avec une valeur typique de correction (k141 % à k70 %) et on détermine finalement une rampe de freinage correspondante.

3. Procédé selon une ou plusieurs des revendications précédentes, ayant la caractéristique suivante :

   3.1 on peut adapter le nombre et les valeurs des valeurs typiques de correction de base (OVEW, k141 % à k70 %) à une plage de correction souhaitée.

4. Procédé selon une ou plusieurs des revendications précédentes, ayant les caractéristiques suivantes :

   4.1 à l'aide de conditions limites prescrites (MD), comme l'accélération, la limitation des secousses et la longueur de bloc, la commande de vitesse détermine automatiquement la plus petite valeur de correction la plus utile ($k_{min}$) pour une analyse anticipée de bloc selon laquelle, au cours du bloc actuel, on peut freiner à l'avance de bloc suivant souhaitée,

   4.2 on détermine les rampes de freinage nécessaires seulement pour des valeurs typiques de correction (OVEW, k141 % à k70 %) qui sont supérieures ou égales à la plus petite valeur de correction la plus utile ($k_{min}$).

5. Procédé selon une ou plusieurs des revendications précédentes, ayant les caractéristiques suivantes :

   5.1 le procédé fonctionne non seulement avec une prescription d'avance sous forme de vitesse d'avance, mais aussi avec une prescription d'avance sous forme d'avance en rotation du fait que l'on tient compte en même temps, pour les valeurs typiques de correction paramétrées (OVEW, k141 % à k70 %), d'une plage possible de vitesse de rotation de broche,

5.2 on corrige la valeur de correction ($k_{ist}$) donnée réellement par un facteur formé à partir de la vitesse de rotation réelle ($n_{ist}$) et de la vitesse de rotation de consigne ($n_{Soll}$).

**6.** Dispositif pour la mise en oeuvre du procédé selon une ou plusieurs des revendications précédentes, ayant les caractéristiques suivantes :

6.1 le dispositif comporte une unité de prétraitement pour l'analyse anticipée de bloc (VSA), unité dans laquelle des données de bloc (SD) et des données de machine (MD) sont introduites,

6.2 des valeurs typiques de correction pouvant être paramétrées sont mémorisées dans une mémoire de données (OVEW) et sont mises à la disposition de l'unité de prétraitement pour l'analyse anticipée de bloc (VSA),

6.3 des rampes de freinage (BR) déterminées par l'unité de prétraitement pour l'analyse anticipée de bloc (VSA) sont mémorisées dans une autre mémoire de données (P2) pour plusieurs valeurs typiques de correction pour un certain nombre de blocs de données suivants,

6.4 une valeur de correction réelle ($k_{ist}$) d'un régulateur de correction (OVR) est envoyée dans un interpolateur (I) placé du côté aval de cette mémoire de données (P2), cette valeur permettant d'interpoler à partir des données de la mémoire de données (P2) une rampe de freinage adaptée à la valeur de correction réelle ($k_{ist}$).

FIG 1

SD

VSA

G01 X80
F1000 R2

$v_A{}^2 = 2a_A(N_B - N_A) +$
$\quad\quad 2a_B(N_C - N_B)$

P1

NA
⋮
NB

B1

BR

k141%
⋮
⋮
k70%

OVEW

P2

BR vA k141%
⋮
BR vB k70%

B2

I

BR vA k141%
↓
BR vA k120%
↑
BR vA k100%

$k_x{}^2 \leq \dfrac{v_B{}^2 - m_A(N_B - N_A)}{v_A{}^2}$

ZS

LR$_x$

A$_x$

LR$_y$

A$_y$

MD

$a_{max}$

$v_{max}$

$k_{ist}$

$k_{ist}$

100%

$k_{min}$    $k_{max}$

EP 0 791 193 B1

FIG 2